# EUROPÄISCHE PATENTSCHRIFT

(11) **EP 0 555 740 B1**
(45) Veröffentlichungstag und Bekanntmachung des Hinweises auf die Patenterteilung: **13.12.1995**
(21) Anmeldenummer: 93101607.5
(22) Anmeldetag: 03.02.1993
(51) Int. Cl.: B01D 27/00, B01D 27/08, B01D 29/50

(54) **Filtervorrichtung**
Filtering device
Installation de filtrage

(30) Priorität: 14.02.1992 DE 4204354
(43) Veröffentlichungstag der Anmeldung: 18.08.1993
(73) Patentinhaber: BASF Magnetics GmbH, 68165 Mannheim (DE)
(72) Erfinder: Schwarz, Lothar, W-7602 Oberkirch (DE); Kuntz, Guenther, W-8000 München 83 (DE)
(74) Vertreter: Karau, Wolfgang, Dr.

(56) Entgegenhaltungen:
- DE-A- 3 517 032
- DE-A- 3 520 139
- DE-A- 3 917 517
- DE-B- 2 216 228
- GB-A- 1 136 530
- US-A- 4 882 051

## Beschreibung

Die Erfindung betrifft eine Filtervorrichtung zur Filtration von Flüssigkeiten oder Dispersionen mit einem Filtergehäuse, einem Filterdeckel, mit am Deckel hängenden Filterkerzen, mit einem mediendichten Folienbeutel, dessen Länge und Breite größer sind als die Dimension des Filtergehäuses, der die Filterkerzen umgibt und der im Filtergehäuse anliegt, mit einer zwischen Deckel und Filtergehäuse angeordneten Zufuhröffnung, die mit dem Inneren des Folienbeutels kommuniziert und mit vom Inneren der Filterkerze nach oben ausgehenden Abflußstutzen, die den Filterdeckel durchqueren und in einen gemeinsamen Abflußstutzen im Filterdeckel münden.

Filtervorrichtungen der eingangs genannten gattungsmäßigen Art sind aus dem Stand der Technik bekannt. So ist in der DE-B-22 16 228 ein Filtergerät beschrieben, bei dem sich im Inneren des Filtergehäuses eine zusammen mit der Filterkerze wegwerfbare elastische Hülle befindet, die sich am Inneren des Filterelements abstützt, so daß das Filterelement ohne Verunreinigung der Umgebung schnell ausgetauscht werden kann. In der DE-A-35 20 139 ist eine Filtervorrichtung mit einem mediendichten Schlauch beschrieben, welcher mit seinem einen Endbereich mit dem einen Ende der Filterpatrone über einen scheibenförmigen Adapter fest verbunden ist und wobei der zweite Endbereich des Schlauchs zumindest während des Betriebes der Filtervorrichtung geschlossen ist. In der US-A-4 882 051 ist eine Filtervorrichtung insbesondere für magnetische Dispersionen beschrieben, bei der ein gleichfalls mediendichter Folienbeutel in einem Filtergehäuse sitzt, wobei durch seine obere Öffnung unter Druck die zu filtrierende Flüssigkeit einströmt und durch eine zentral im Folienbeutel sitzende Filterkerze durchgepreßt wird und die Filtervorrichtung nach unten verläßt, wobei das untere Ende des Foliensackes fest mit der Filterkerze verbunden ist. Aus den DE-A-39 09 382 und DE-A-39 17 517 sind Einzel-Filterelemente für magnetische Dispersionen bekannt, welche beim Wechsel des Filtereinsatzes nur einen minimalen Filtratverlust verursachen. Dies wird in der erstgenannten Anmeldung dadurch bewirkt, daß sich in einem nach oben offenen ringförmigen Spalt zwischen einem äußeren und einem inneren Stützkörper ein Filtereinsatz befindet, bestehend aus kreisringförmigen Boden- und Deckelteil mit Ein- und Austrittsöffnungen und gegebenenfalls flexiblen Wandungen und Filtermaterial zwischen den Wandungen, durch das die zu filtrierende Dispersion radial von dem einen in den anderen Hohlraum durchgepreßt wird. In der letztgenannten Anmeldung ist eine Filterkerze beschrieben, welche ebenfalls radial von außen nach innen von der zu filtrierenden Dispersion durchströmt wird und wobei im Innenraum der Filterkerze ein kompressibler flexibler Volumenverdrängungskörper enthalten ist, der sich bei Druckbeaufschlagung komprimiert und so das Filtrat durchläßt und bei Filterwechsel wieder seine ursprüngliche Gestalt annimmt, so daß nur ein minimales Volumen verloren geht.

Bei der Verwendung von Filterelementen und Filtergehäusen, bei denen große Volumina von Flüssigkeiten oder Dispersionen durchgepreßt werden, muß bedingt durch die Bauform und Kombination von mehreren Filterelementen zu einem Gesamtfilter mit größerer Filterfläche beim Wechseln der Filterkerzen mit erhöhten Verlustmengen an Filtrat gerechnet werden. Dies führt bei der Verwendung von toxischen, umweltgefährdenden und teuren Einsatzstoffen zu Schwierigkeiten bei der Beseitigung der verbrauchten Filterelemente beziehungsweise zu hohen Filtratkosten. Insbesondere gilt dies für die Filtration von magnetischen Dispersionen, bei denen polymere Bindemittel, anorganische Pigmente und Zusatzstoffe in einem organischen Lösungsmittel dispergiert sind. Derartige Dispersionen werden unter Differenzdrucken von 2 bis 10 bar durch Filter mit Porenweiten von 1 bis 50 »m filtriert.

Deswegen bestand die Aufgabe, eine Filtervorrichtung der oben genannten gattungsmäßigen Art zu schaffen, welche einen wechselbaren Filtereinsatz hat und
- bei Wechsel des Filtereinsatzes nur einen minimalen Filtratverlust verursacht und wobei die Anzahl der zu reinigenden Teile reduziert ist
- so gestaltet ist, daß der Filtereinsatz dem Betriebsdruck standhält
- bei Filterwechsel ein Kontakt des Bedienungspersonals mit der zu filtrierenden Flüssigkeit auf ein Minimum reduziert wird.

Erfindungsgemäß wurde die Aufgabe gelöst mit einer Filtervorrichtung mit den im kennzeichnenden Teil des Anspruchs 1 genannten Merkmalen. Weitere Einzelheiten der Erfindung gehen aus den Unteransprüchen, der Beschreibung und den Zeichnungen hervor.

Im folgenden wird die Erfindung anhand der Zeichnungen näher erläutert und zwar zeigt
- Figuren 1 - 3: Längsschnitte durch erfindungsgemäße Filterelemente
- Figuren 4 - 5: Querschnitte durch ein Filterelement gemäß Figur 2 entlang der Linie IV

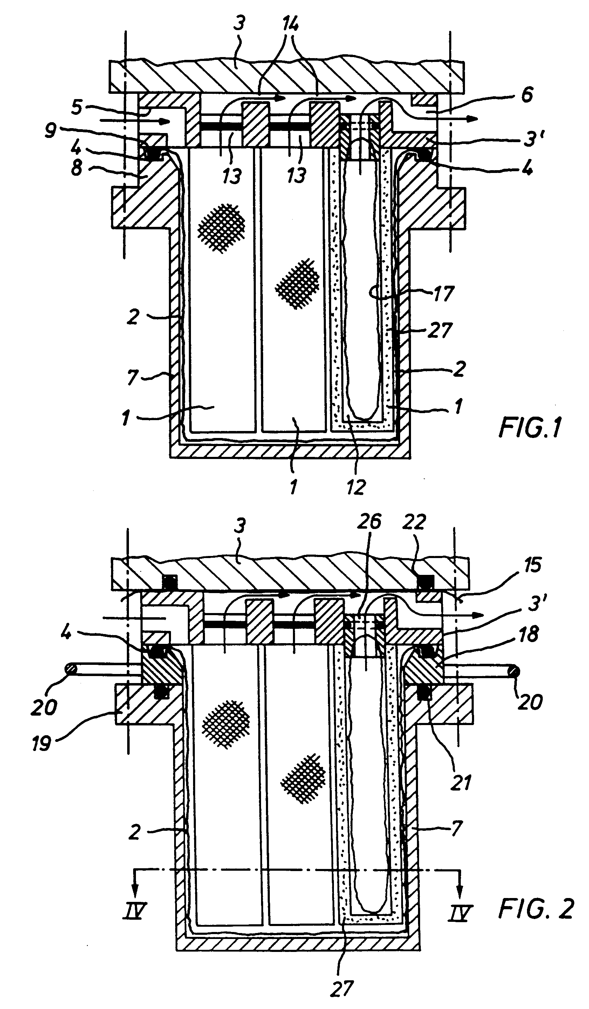

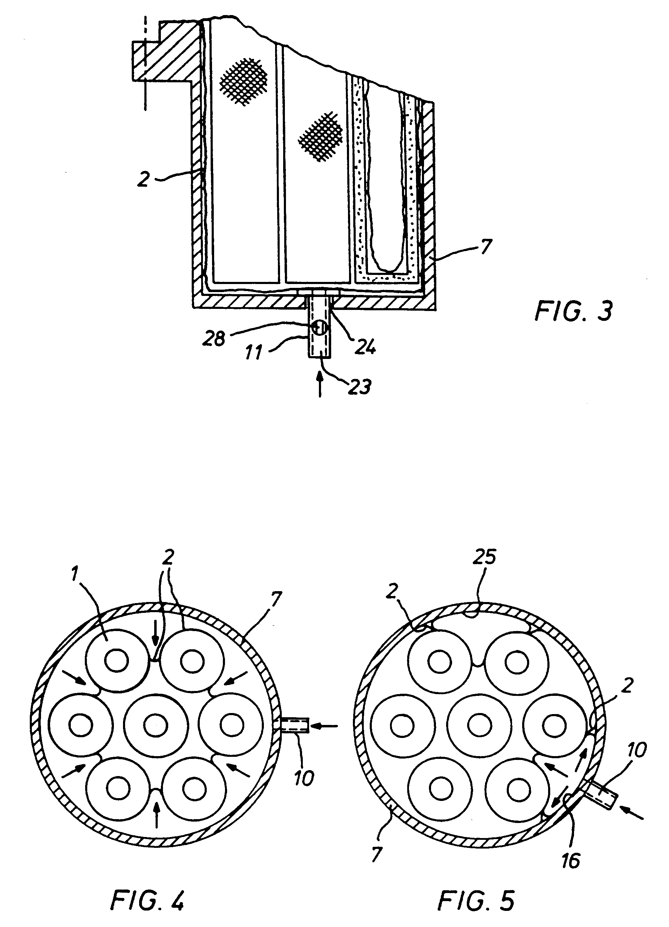

Die Figur 1 zeigt eine Ausführung der erfindungsgemäßen Filtervorrichtung. Das Filterelement besteht aus einem becherförmigen hohlzylindrischen äußeren Gehäuse (7) mit einem oberen ringförmigen Flansch (8). Auf diesem sitzt der Deckel (3) auf, der durch Verschrauben mit dem Flansch verbunden ist und dessen unterer Teil (3') mit verschiedenen Öffnungen versehen ist, die im Folgenden näher erläutert werden. Eine seitliche Öffnung (5) ist bestimmt für den Eintritt der Dispersion in das Filtergefäß, in das eine Vielzahl von Filterkerzen (1) eintauchen, die am unteren Teil des Deckels (3') eingesteckt und befestigt (26) sind. Die zu filtrierende Dispersion durchströmt die Filterkerzen in radialer Richtung durch das Filtergewebe (27) von außen nach innen und durch den Innenraum (12), der mit den Öffnungen (13) im Filterdeckel verbunden ist, fließt die filtrierte Dispersion über Kanäle (14) und den Auslaßstutzen (6) ab. Mögliche Anordnungen der Filterkerzen im Filterelement gehen aus den Querschnittzeichnungen Figur 4 und Figur 5 hervor.

An der Innenwand des Filtergehäuses (7) liegt ein flexibler Folienbeutel (2) an, dessen oberes Ende offen ist und dessen offenes Ende mit einem flexiblen O-Ring (4) verbunden ist, wobei der O-Ring in einer ringförmigen Ausnehmung (9) des Flansches (8) sitzt. Die Länge und Breite des Folienbeutels sind größer als die entsprechende Dimension des Filtergehäuses. Auf diese Weise wird eine ausreichende Abdichtung zwischen dem Deckel (3, 3') und dem Filtergefäß (7) bewerkstelligt. Erfindungswesentlich ist, daß der Durchmesser des O-Ringes (4) gleich dem Durchmesser des Folienbeutels (2) ist. Auf diese Weise wird nämlich das offene Ende des Folienbeutels faltenfrei mit dem O-Ring verbunden und so eine hervorragende Abdichtung besorgt.

Ist ein Filterwechsel erforderlich, so wird der Deckel durch Abschrauben vom Filtergehäuse (7) entfernt und der Folienbeutel (2) wird samt den Filterkerzen und der im Filterinnenraum befindlichen Restdispersion entfernt und entsorgt. Daraufhin können vom unteren Teil des Deckels (3') die Filterelemente (1) abgenommen werden, und es braucht lediglich der Deckel (3, 3') gereinigt zu werden, da der Innenraum des Filtergehäuses während der Filtrierzeit nicht mit der Dispersion in Kontakt kam. Daraufhin kann ein neuer Filterbeutel eingesetzt werden, dann können neue Filterkerzen mit dem Deckel zusammengesteckt werden, worauf ein weiterer Filtrierzyklus beginnt.

Eine zweite, besonders vorteilhafte Ausführungsform der erfindungsgemäßen Filtriervorrichtung ist in Figur 2 dargestellt. Bei dieser Ausführung sitzt der den Folienbeutel (2) haltende O-Ring (4) nicht im Filtergehäuse selbst, sondern in der Ausnehmung eines separaten ringförmigen Teils (18), welches zwei seitliche Griffe (20) aufweist. Dieser Ring (18) ist gegen den das obere Ende des Filtergehäuses (7) bildenden Flansch (19) mittels eines in einer ringförmigen Vertiefung des Flansches sitzenden O-Ringes (21) zusätzlich abgedichtet. Auf dem Ring (18) sitzt ein Zwischendeckel (3') auf, dessen Aufbau dem anhand von Figur 1 näher geschilderten unteren Teil des Deckels entspricht.

Auf dem Zwischendeckel (3') befindet sich der Abschlußdeckel (3) als separates Teil, der durch eine Schraubverbindung mit dem Filtergehäuse (7) beziehungsweise dessen Flansch (19) fest verbunden ist. Zwischen dem Zwischendeckel (3') und dem Deckel (3) ist eine Folie (15) eingelegt, wobei die Abdichtung durch einen O-Ring (22) bewirkt wird, der in einer im unteren Teil des Deckels (3) vorgesehenen ringförmigen Ausnehmung sitzt und der die Folie (15) an den Zwischendeckel (3') andrückt.

Ist bei dieser Filtervorrichtung ein Filterwechsel erforderlich, so werden die (nicht gezeichneten) Verschraubungen zwischen Deckel und Filtergehäuse gelöst, der Deckel (3) wird abgenommen, worauf der gesamte Filtereinsatz mit Zwischendeckel (3') mit Hilfe der Griffe (20) herausgehoben und zum Reinigen beziehungsweise zur Entsorgung des Filterbeutels und der Filterkerzen entfernt werden kann. Insbesondere bei dieser Ausführungsform wird jeglicher Kontakt des Bedienungspersonals mit der Dispersion vermieden; außerdem wird der Austritt von aggressiven Lösungsmitteln auf ein Minimum reduziert. Schließlich ist bei dieser Ausführungsform die Anzahl der zu reinigenden Teile auf den Zwischendeckel (3') reduziert, da alle anderen Teile nicht mit der Dispersion in Berührung gekommen sind. Aus der Beschreibung ist auch ersichtlich, daß bei dieser Ausführungsform ein rascher und einfacher Filterwechsel möglich ist.

Eine weitere Ausführungsform ist aus der Figur 3 ersichtlich. Diese Ausführungsform entspricht, was das Einlegen und die Abdichtung des oberen Endes des Folienbeutels (2) entspricht, den Ausführungen der Figuren 1 und 2. Jedoch tritt bei dieser Ausführungsform die Dispersion nicht seitlich durch den Deckel beziehungsweise Zwischendeckel (3, 3') in das Filtergehäuse (7) ein, sondern vielmehr durch eine Öffnung (23), welche sich zentral am unteren Ende des Folienbeutels (2) befindet. Ein Rohrstück (11) ist mit dem Folienbeutel (2) durch Verschweißen verbunden. Das Rohrstück (11) des Folienbeutels steckt in einer entsprechenden Ausnehmung (24) im unteren Teil des Filtergehäuses und ist mit einem Absperrhahn (28) versehen. Nach Durchströmen der Filterkerzen wie oben beschrieben tritt die gereinigte Dispersion wie bei den anderen Ausführungsformen durch die Kanäle und Querschnitte im Zwischendeckel aus.

Anschließend wird erläutert, wie beim Wechsel der beschriebenen Filtervorrichtung die Aufgabe gelöst wurde, nur einen minimalen Filtratverlust zu verursachen. Nähere Einzelheiten gehen aus den Figuren 1, 4 und 5 hervor.

In Figur 1 ist dargestellt, daß im Innenraum (12) der Filterkerzen (1) ein kompressibler Körper (17) vorhanden ist. Wird beim Wechsel der Filtriervorrichtung der Betriebsdruck weggenommen, so kann sich der Kompressionskörper ausdehnen und verdrängt die in den Filterkerzen noch verbliebene Dispersion bis auf ein Minimum. Eine weitere Reduzierung des Filtratverlustes wird dadurch herbeigeführt, indem durch eine seitliche Öffnung (10) im Filtergehäuse (7) Luft eingeblasen wird, so daß der Filterbeutel (2), wie in Figur 4 dargestellt, von der Wand des Filtergehäuses (7) abgedrängt und teilweise in den freien Raum zwischen den Filterkerzen (1) gedrückt wird und auf diese Weise das Restvolumen erheblich reduziert.

In Figur 5 ist eine alternative Ausführungsform zur Verringerung des Restfiltratvolumens dargestellt. Dabei sind mit Luft aufblasbare Volumenverdrängungskörper (16) zwischen Innenwand des Filtergehäuses und Folienbeutel gleichmäßig im Innenraum des Filtergehäuses verteilt. Ebenso können auch kompressible Volumenverdrängungskörper (25) an dieser Stelle angeordnet sein, wie ebenfalls aus dieser Figur hervorgeht.

Das Filtergehäuse, die Ringe, Zwischenringe und der Deckel bestehen vorzugsweise aus rostfreiem Stahl, der Zwischendeckel (3') kann ebenso aus hartem Kunststoff bestehen.

Die Filterkerzen enthalten als Filtermaterial (27) ein aus dem Stand der Technik bekanntes gefaltetes, gewickeltes oder gesintertes Medium, beispielsweise Polypropylen, Polyethylenterephthalat, Polyamid, Baumwolle, Glasfaser oder Stahl. Der Folienbeutel (2) und die Folie (15) bestehen aus synthetischem Kunststoff-Material, beispielsweise aus Polyethylen oder Polypropylen.

Durch die vorstehend genannten Ausführungsformen sind die eingangs gestellten Aufgaben vollständig gelöst, so daß Reinigungskosten und Regenerierkosten gespart und die Verluste beim Filterwechsel wesentlich reduziert werden.

## Patentansprüche

1. Filtervorrichtung zur Filtration von Flüssigkeiten oder Dispersionen mit einem Filtergehäuse (7), einem Filterdeckel, mit am Deckel hängenden Filterkerzen (1), mit einem mediendichten Folienbeutel (2), dessen Länge und Breite größer sind als die entsprechende Dimension des Filtergehäuses, der die Filterkerzen umgibt und zumindest mittelbar am Filtergehäuse anliegt, mit einem am Deckel oder im Filtergehäuse vorgesehenen Zuführstutzen (5, 11) für die Flüssigkeit, welche mit dem Inneren des Folienbeutels kommuniziert sowie mit einem vom Inneren der Filterkerzen aus nach außen gehenden Abflußstutzen (6), dadurch gekennzeichnet, daß das obere offene Ende des Folienbeutels (2) mit einem O-Ring (4) verbunden ist, welcher an einer ringförmigen Ausnehmung (9) des oberen Flansches (8) des Filtergehäuses sitzt, welches mit dem Deckel (3) durch Verschrauben fest verbunden ist, wobei der Durchmesser des O-Ringes (4) gleich dem Durchmesser des Folienbeutels (2) ist, wobei im Innenraum (12) der Filterkerzen (1) kompressible Volumenverdrängungskörper (17) und/oder zwischen Innenwand des Filtergehäuses (7) und dem Folienbeutel (2) kompressible oder von außen mit Druckluft aufblasbare Volumenverdrängungskörper (16, 25) angeordnet sind und/oder in den Raum zwischen Folienbeutel (2) und Innenwand des Filtergehäuses (7) durch eine Öffnung (10) Druckluft einblasbar ist.

2. Filtervorrichtung nach Anspruch 1, dadurch gekennzeichnet, daß sich zwischen dem Deckel (3) und dem Filtergehäuse (7) ein mit Öffnungen versehener Zwischendeckel (3') zum Zuführen und Abführen der Dispersion befindet und daß das obere offene Ende des Folienbeutels (2) in einem vom Filtergehäuse (7) abnehmbaren Ring (18) eingelegt ist, auf dem der Zwischendeckel (3') abdichtbar aufsitzt.

3. Filtervorrichtung nach den Ansprüchen 1 und 2, dadurch gekennzeichnet, daß zwischen dem Zwischendeckel (3') und dem Deckel (3) eine Kunststoff-Folie (15) eingelegt ist, die durch einen in einer ringförmigen Ausnehmung der Unterseite des Filterdeckels (3) angebrachten O-Ring (22) gegen den Zwischendeckel (3') anpreßbar und abdichtbar ist.

4. Filtervorrichtung nach den Ansprüchen 1 bis 4, dadurch gekennzeichnet, daß am unteren Ende des Folienbeutels (2) ein Rohrstück (11) angeschweißt ist, das mit einem Ablaßhahn (28) versehen ist und welches durch eine untere Öffnung (24) des Filtergehäuses (7) durchgeführt ist.

## Claims

1. A filtering device for filtering liquids or dispersions, having a filter housing (7), a filter cover, having filter cartridges (1) suspended from the cover, having a media-impermeable film bag (2), the length and width of which are greater than the corresponding dimensions of the filter housing, which surrounds the filter cartridges and bears at least indirectly against the filter housing, having a supply connection piece (5, 11) for the liquid, which is provided on the cover or in the filter housing and communicates with the interior of the film bag, and also having a discharge connection piece (6), which leads out from the interior of the filter cartridges, wherein the upper open end of the film bag (2) is connected to an O-ring (4), which is seated on an annular recess (9) of the upper flange (8) of the filter housing, which flange is firmly connected to the cover (3) by screwing, the diameter of the O-ring (4) being equal to the diameter of the film bag (2), compressible volume displacers (17) being arranged in the interior space (12) of the filter cartridges (1) and/or compressible or externally pneumatically-inflatable volume displacers (16, 25) being arranged between the inner wall of the filter housing (7) and the film bag (2) and/or it being possible for compressed air to be blown in through an opening (10) into the space between the film bag (2) and the inner wall of the filter housing (7).

2. A filter device as claimed in claim 1, wherein an intermediate cover (3'), provided with openings, for supplying and discharging the dispersion is located between the cover (3) and the filter housing (7) and wherein the upper open end of the film bag (2) is placed in a ring (18) which can be removed from the filter housing (7) and on which the intermediate cover (3') rests in a sealable manner.

3. A filter device as claimed in claims 1 and 2, wherein a plastics film (15) is placed between the intermediate cover (3') and the cover (3) and can be pressed against the intermediate cover (3') and sealed by an O-ring (22) fitted in an annular recess in the underside of the filter cover (3).

4. A filter device as claimed in claims 1 to 4, wherein a pipe piece (11) is welded onto the lower end of the film bag (2), is provided with an outlet cock (28) and is led through a lower opening (24) of the filter housing (7).

## Revendications

1. Dispositif de filtration, pour filtrer des liquides ou des dispersions, avec un carter de filtre (7), un couvercle de filtre, des bougies filtrantes (1) accrochées en suspension au couvercle, un sachet en feuille (2) étanche au fluide, dont la longueur et la largeur sont supérieures aux dimensions correspondantes du carter de filtre, entourant les bougies filtrantes et appuyant au moins indirectement sur le carter de filtre, une tubulure d'alimentation (5, 11) prévue sur le couvercle ou dans le carter de filtre, pour le liquide, qui est en communication avec l'intérieur du sachet en feuille, ainsi qu'une tubulure d'évacuation (6) partant de l'intérieur des bougies filtrantes et allant à l'extérieur, caractérisé en ce que l'extrémité supérieure ouverte du sachet en feuille (2) est reliée à un élément torique (4), siégeant sur un évidement (9) annulaire de la bride supérieure (8) du carter de filtre et qui est relié rigidement par vissage au couvercle (3), le diamètre de l'élément torique (4) étant égal au diamètre du sachet en feuille (2), des corps de refoulement de volume (17) compressibles et/ou des corps de refoulement de volume (16, 25), compressibles entre la paroi intérieure du carter de filtre (7) et le sachet en feuille (2) ou bien gonflables depuis l'extérieur avec de l'air comprimé, étant disposés dans l'espace intérieur (12) des bougies de filtration (1) et/ou étant susceptibles d'être gonflés dans l'espace se trouvant entre le sachet en feuille (2) et la paroi intérieure du carter de filtre (7), à l'aide d'air comprimé, en passant par une ouverture (10).

2. Dispositif de filtration selon la revendication 1, caractérisé en ce qu'entre le couvercle (3) et le carter de filtre (7) se trouve un couvercle intermédiaire (3') pourvu d'ouvertures pour assurer l'amenée et l'évacuation de la dispersion, et en ce que l'extrémité supérieure ouverte du sachet en feuille (2) est insérée dans un anneau (18), pouvant être enlevé du carter de filtre (7) et sur lequel le couvercle intermédiaire (3') repose, avec une possibilité d'étanchéité.

3. Dispositif de filtration selon la revendication 1 et 2, caractérisé en ce qu'entre le couvercle intermédiaire (3') et le couvercle (3) est insérée une feuille en matière synthétique (15), pouvant être pressée et pouvant constituer une isolation étanche, contre le couvercle intermédiaire (3') au moyen d'un élément torique (22) monté dans un évidement annulaire de la face inférieure du couvercle de filtre (3).

4. Dispositif de filtration selon les revendications 1 à 3, caractérisé en ce que, sur l'extrémité inférieure du sachet en feuille (2), est rapportée par soudage une pièce tubulaire (11), pourvue d'un robinet d'évacuation (28) et traversée par une ouverture inférieure (24) du carter de filtre (7).
